# EUROPÄISCHE PATENTANMELDUNG

(11) **EP 4 807 393 A1**
(43) Veröffentlichungstag der Anmeldung: **16.09.2026**
(21) Anmeldenummer: 26158469.2
(22) Anmeldetag: 13.02.2026
(51) Int. Cl.: G01S 7/481, G01S 17/08

(54) **OPTOELEKTRONISCHER SENSOR**

(30) Priorität: 11.03.2025 DE 102025109111
(71) Anmelder: SICK AG, 79183 Waldkirch (DE)
(72) Erfinder: Karle, Armin, 79283 Bollschweil (DE); Wiethege, Friedhelm, 79350 Sexau (DE); Döbele, Christian, 79341 Kenzingen (DE)
(74) Vertreter: Manitz Finsterwald Patent- und Rechtsanwaltspartnerschaft mbB

(57) **Zusammenfassung**

Ein optoelektronischer Sensor umfasst ein Gehäuse, einen Lichtsender zum Aussenden von Sendelichtstrahlen, einen Lichtempfänger zum Empfangen von Empfangslichtstrahlen und eine Frontscheibe für einen Durchtritt der Sendelichtstrahlen und der Empfangslichtstrahlen, wobei die Frontscheibe entlang einer Trennlinie in einen ersten, einen Durchtrittsbereich für die Sendelichtstrahlen umfassenden Frontscheibenabschnitt und einen zweiten, einen Durchtrittsbereich für die Empfangslichtstrahlen umfassenden Frontscheibenabschnitt unterteilt ist, wobei in dem Gehäuse zur Trennung von Sendelicht und Empfangslicht ein lichtundurchlässiges Trennelement angeordnet ist, das in einen entlang der Trennlinie verlaufenden Spalt der Frontscheibe hineingeführt oder durch diesen hindurchgeführt ist. Der Spalt erstreckt sich lediglich entlang eines Teils der Trennlinie, so dass die Trennlinie außer einem durch den Spalt gebildeten Unterbrechungsbereich einen Verbindungsbereich aufweist, in welchem eine stoffschlüssige Verbindung zwischen dem ersten Frontscheibenabschnitt und dem zweiten Frontscheibenabschnitt besteht.

## Beschreibung

Die Erfindung betrifft einen optoelektronischen Sensor mit einem Gehäuse, einem in dem Gehäuse angeordneten Lichtsender zum Aussenden von Sendelichtstrahlen, einem in dem Gehäuse angeordneten Lichtempfänger zum Empfangen von Empfangslichtstrahlen und einer lichtdurchlässigen Frontscheibe für einen Durchtritt der Sendelichtstrahlen und der Empfangslichtstrahlen, wobei die Frontscheibe entlang einer Trennlinie in einen ersten, einen Durchtrittsbereich für die Sendelichtstrahlen umfassenden Frontscheibenabschnitt und einen zweiten, einen Durchtrittsbereich für die Empfangslichtstrahlen umfassenden Frontscheibenabschnitt unterteilt ist, und wobei in dem Gehäuse zur Trennung von Sendelicht und Empfangslicht ein lichtundurchlässiges Trennelement angeordnet ist, das in einen entlang der Trennlinie verlaufenden Spalt der Frontscheibe hineingeführt oder durch diesen hindurchgeführt ist.

Derartige Sensoren werden in verschiedenen Bereichen von Industrie und Handwerk dazu verwendet, Gefahrenzonen zu überwachen, Objekte zu detektieren oder Entfernungen zu bestimmen.

Zum Erzielen einer hohen Empfindlichkeit ist es wichtig, ein optisches Übersprechen im Gehäuse zu vermeiden. Hierfür kann der Empfangskanal mittels des lichtundurchlässigen Trennelements vom Sendelicht abgeschirmt werden, so dass nur von einem Objekt oder einer Hintergrundfläche reflektiertes Licht zum Lichtempfänger gelangen kann. Allerdings ist es wegen unvermeidlicher Fertigungstoleranzen schwierig, am Übergang zwischen Frontscheibe und Trennelement jegliche Restspalte zu vermeiden. Ein weiteres Problem stellt innerhalb des Frontscheibenmaterials gestreutes Sendelicht dar. Das Hindurchführen des Trennelements durch die Frontscheibe wirkt diesen Problemen entgegen.

Allerdings ist das Zusammenfügen der Frontscheibenteile mit dem dazwischen befindlichen Trennelement mit einem hohen Fertigungsaufwand und dementsprechenden Kosten verbunden.

Es ist eine Aufgabe der Erfindung, einen optoelektronischen Sensor der vorstehend genannten Art anzugeben, der einfach und kostengünstig herstellbar ist.

Die Lösung der Aufgabe erfolgt durch einen optoelektronischen Sensor mit den Merkmalen des Anspruchs 1.

Erfindungsgemäß erstreckt sich der Spalt derart lediglich entlang eines Teils der Trennlinie, dass die Trennlinie außer einem durch den Spalt gebildeten Unterbrechungsbereich wenigstens einen Verbindungsbereich aufweist, in welchem eine stoffschlüssige Verbindung zwischen dem ersten Frontscheibenabschnitt und dem zweiten Frontscheibenabschnitt besteht.

Die Frontscheibenabschnitte sind somit trotz des vorgesehenen Spalts fest miteinander verbunden, so dass bei der Montage des Sensors keine Handhabung mehrerer Frontscheibenteile erforderlich ist. Außerdem ist die Fertigung einer aus einem Stück bestehenden Frontscheibe besonders einfach und kostengünstig. Ein weiterer Vorteil der Erfindung besteht darin, dass im Verbindungsbereich keine Füge- und Dichtprobleme auftreten. Prinzipiell könnte es im Verbindungsbereich wegen der fehlenden Durchführung des Trennelements zu einem Übertritt von Sendelicht in den Empfangskanal kommen. Es hat sich jedoch gezeigt, dass dies in vielen Anwendungen hingenommen werden kann, insbesondere im Falle eines relativ kleinen Verbindungsbereichs und/oder eines vom Empfangskanal abgewandten Verbindungsbereichs.

Vorzugsweise ist zumindest ein Abschnitt des Unterbrechungsbereichs zwischen dem Durchtrittsbereich für die Sendelichtstrahlen und dem Durchtrittsbereich für die Empfangslichtstrahlen angeordnet.

Besonders bevorzugt ist der Verbindungsbereich auf einer dem Durchtrittsbereich für die Empfangslichtstrahlen abgewandten Seite des Durchtrittsbereiches für die Sendelichtstrahlen angeordnet. Hierdurch ist sichergestellt, dass der Empfangsbereich durch die Frontscheibe hindurchreichend vom Sendelicht möglichst gut abgeschirmt ist. Wenn sich der entlang der Trennlinie angeordnete Verbindungsbereich an einem solchen Bereich der Trennlinie befindet, der dem Durchtrittsbereich für die Empfangslichtstrahlen abgewandt ist, ist im Verbindungsbereich eventuell auftretendes Störlicht im Allgemeinen unproblematisch.

In der vorliegenden Offenbarung ist der Begriff "Trennlinie" in dem Sinne breit zu verstehen, dass auch sowohl gerade verlaufende als auch gekrümmte, polygonale oder unregelmäßig verlaufende Begrenzungslinien umfasst sind.

Eine Ausführungsform der Erfindung sieht insbesondere vor, dass die Trennlinie vollständig um den Durchtrittsbereich für die Sendelichtstrahlen umläuft und der Spalt unvollständig um den Durchtrittsbereich für die Sendelichtstrahlen umläuft. Der Durchtrittsbereich für die Sendelichtstrahlen ist in diesem Fall ein innerhalb der Frontscheibe befindlicher, das heißt von der Umrandung der Frontscheibe entfernter Bereich. Die Trennlinie ist bei dieser Ausgestaltung in sich geschlossen, während der Spalt zwei Enden aufweist, zwischen denen sich der Verbindungsbereich erstreckt. Die Form der vollständig umlaufenden Trennlinie kann beliebig sein, beispielsweise kreisförmig, oval oder rechteckig.

Gemäß einer speziellen Ausgestaltung weist der Verlauf des Spalts die Form eines unterbrochenen Rings auf. Die unterbrochene Stelle bildet hierbei den Verbindungsbereich. Insbesondere kann der Spalt einen hufeisenförmigen Verlauf aufweisen.

Bevorzugt erstreckt sich der Verbindungsbereich, der durch die Unterbrechung des Rings gebildet wird, über einen Winkel von wenigstens 10°, vorzugsweise von wenigstens 20°, und/oder höchstens 180°, vorzugsweise von höchstens 90°. Dadurch wird eine stabile Verbindung zwischen den Frontscheibenabschnitten beziehungsweise eine ausreichende optische Trennung des Sendekanals vom Empfangskanal erreicht.

Gemäß einer weiteren Ausgestaltung ist das Trennelement rohrförmig und derart angeordnet, dass im Betrieb des optoelektronischen Sensors die Sendelichtstrahlen durch das rohrförmige Trennelement hindurch verlaufen. Das rohrförmige Trennelement umschließt hierbei das Bündel der Sendelichtstrahlen vollständig und sorgt somit dafür, dass einem optischen Übersprechen besonders effektiv entgegengewirkt wird. Das rohrförmige Trennelement kann als einfaches Hohlprofil ausgeführt sein. Gemäß einer speziellen Ausgestaltung ist das rohrförmige Trennelement zylindrisch. Grundsätzlich kann der Querschnitt des rohrförmigen Trennelements jedoch auch eine andere Form aufweisen, beispielsweise eine elliptische, eine rechteckige oder eine polygonale Form.

Das rohrförmige Trennelement kann an einem Rohrende einen unvollständig umlaufenden Vorsprung aufweisen, welcher in den Spalt eingreift, vorzugsweise den Spalt vollständig ausfüllt. Abgesehen von dem Vorsprung kann das rohrförmige Trennelement vollständig umlaufend gestaltet sein, also eine durchgehende Rohrwand aufweisen. Das rohrförmige Trennelement kann für eine leichtere Montage einen an den Vorsprung angrenzenden Klemm- oder Anlageflansch aufweisen.

Eine weitere Ausführungsform der Erfindung sieht vor, dass sich die Trennlinie von einem ersten Rand der Frontscheibe bis zu einem entgegengesetzten zweiten Rand der Frontscheibe erstreckt und sich der Spalt lediglich über einen zentralen Bereich der Trennlinie oder einseitig über einen an den ersten Rand oder den zweiten Rand angrenzenden Bereich erstreckt. Der Verlauf der Trennlinie kann hierbei gerade, geknickt oder gekrümmt sein. Diese Ausführungsform ermöglicht die Verwendung einfacher, beispielsweise plattenartiger Trennwände zur Vermeidung des optischen Übersprechens.

Das Trennelement kann durch unterschiedliche Verbindungsverfahren mit der Frontscheibe verbunden sein, beispielsweise durch Kleben oder Schweißen.

Die Verbindung zwischen dem Trennelement und der Frontscheibe könnte auch eine Art Bajonettverschluss umfassen, wobei ein rohrförmiges Trennelement mit kreisförmigem Querschnitt derart in einen Unterbrechungsbereich mit passendem kreisförmigem Verlauf eingesetzt wird, dass der Verbindungsbereich in eine endseitige Aussparung des Trennelements gelangt. Die Aussparung kann hierbei derart geformt sein, dass durch eine Drehbewegung des eingesetzten Trennelements der Verbindungsabschnitt hintergriffen wird und so das Trennelement an der Frontscheibe gehalten wird. Eine solche mechanische Verbindung kann auch zum Beispiel die richtige Positionierung für einen nachfolgenden Klebe- oder Schweißprozess sicherstellen.

Es können auch verschiedene Verbindungsverfahren miteinander kombiniert sein.

Besonders bevorzugt ist das Trennelement im Bereich des Spaltes mit der Frontscheibe verschweißt. Dadurch werden unerwünschte Restspalte wirkungsvoll vermieden und die Verbindung ist sehr stabil. Vorzugsweise ist das Trennelement mittels Ultraschallschweißen mit der Frontscheibe verschweißt. Zur Vereinfachung der Montage können das Trennelement und die Frontscheibe zu einer Vorbaugruppe verschweißt werden, die danach an das Gehäuse angefügt wird.

Gemäß einer weiteren Ausführungsform der Erfindung ist in dem Gehäuse eine elektronische Auswertungseinheit angeordnet, die mit dem Lichtsender und dem Lichtempfänger in Signalverbindung steht und dazu ausgebildet ist, für eine Entfernungsbestimmung die Laufzeit des Lichts zwischen dem Lichtsender und dem Lichtempfänger zu ermitteln. Insbesondere kann es sich bei einem erfindungsgemäßen optoelektronischen Sensor um einen Time-of-Flight-Sensor (TOF-Sensor) handeln. Solche Sensoren weisen im Allgemeinen besonders empfindliche Lichtempfänger auf, welche besonders sorgfältig gegen Störlicht geschützt werden müssen. Grundsätzlich kann ein erfindungsgemäßer optoelektronischer Sensor auch als Lichtschranke, Lichttaster oder dergleichen ausgeführt sein.

Weiterbildungen der Erfindung sind auch den abhängigen Ansprüchen, der Beschreibung, sowie den beigefügten Zeichnungen zu entnehmen.

Die Erfindung wird nachfolgend beispielhaft unter Bezugnahme auf die Zeichnungen beschrieben.
- Fig. 1: zeigt einen erfindungsgemäßen optoelektronischen Sensor in einer Querschnittsansicht.
- Fig. 2: ist ein Ausschnitt aus Fig. 1, der ein Trennelement des optoelektronischen Sensors vergrößert zeigt.
- Fig. 3: zeigt den optoelektronischen Sensor gemäß Fig. 1 in perspektivischer Darstellung mit abgenommener Frontscheibe.
- Fig. 4: ist eine vergrößerte Teildarstellung der Frontscheibe des optoelektronischen Sensors gemäß Fig. 1 in einer Vorderansicht.
- Fig. 5: zeigt die Frontscheibe und das Trennelement des in Fig. 1 gezeigten optoelektronischen Sensors in Einzelansicht.
- Fig. 6: zeigt eine alternativ gestaltete Frontscheibe eines erfindungsgemäßen optoelektronischen Sensors in einer Vorderansicht.

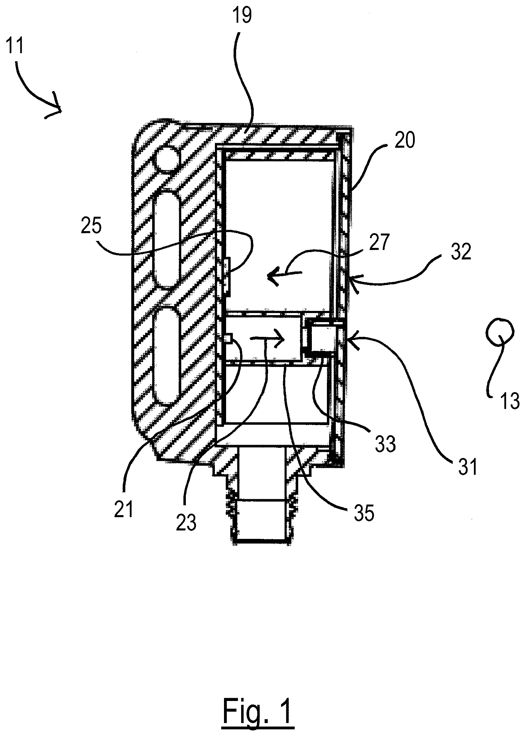

Der in Fig. 1 dargestellte, gemäß einer Ausführungsform der Erfindung gestaltete optoelektronische Sensor 11 dient zum Detektieren von Objekten 13, beispielsweise mittels eines Laufzeitverfahrens. Der optische Sensor 11 weist ein Gehäuse 19 auf, das durch eine Frontscheibe 20 abgedeckt ist. In dem Gehäuse 19 sind ein Lichtsender 21 zum Aussenden von Sendelichtstrahlen 23 durch die Frontscheibe 20 in Richtung eines zu detektierenden Objekts 13, ein Lichtempfänger 25 zum Empfangen von durch die Frontscheibe 20 tretenden Empfangslichtstrahlen 27 und eine nicht eigens dargestellte elektronische Steuer- und Auswertungseinheit untergebracht.

Die Frontscheibe 20 ist aus einem Material gefertigt, das zumindest im Spektralbereich der Sendelichtstrahlen 23 und der Empfangslichtstrahlen 27 transparent ist. Beispielsweise ist die Frontscheibe 20 aus Polycarbonat (PC) oder aus Polymethylmethacrylat (PMMA) gefertigt. Bei dem dargestellten Ausführungsbeispiel ist die Frontscheibe 20 plattenförmig.

Bei dem Lichtsender 21 kann es sich um eine Leuchtdiode oder um eine Laserdiode handeln. Der Lichtempfänger 25 kann eine Photodiode, beispielsweise eine Avalanche-Photodiode, sein.

Der dem Lichtsender 21 gegenüberliegende Bereich der Frontscheibe 20 ist ein Durchtrittsbereich 31 für die Sendelichtstrahlen 23. Analog dazu ist der dem Lichtempfänger 25 gegenüberliegende Bereich der Frontscheibe 20 ein Durchtrittsbereich 32 für die Empfangslichtstrahlen 27. Zur Vermeidung eines optischen Übersprechens ist eine Anordnung aus einem ersten lichtundurchlässigen Trennelement 33 und einem zweiten lichtundurchlässigen Trennelement 35 im Gehäuse 19 untergebracht. Die Trennelemente 33, 35 sind vorzugsweise aus einem lichtdichten Kunststoff gefertigt.

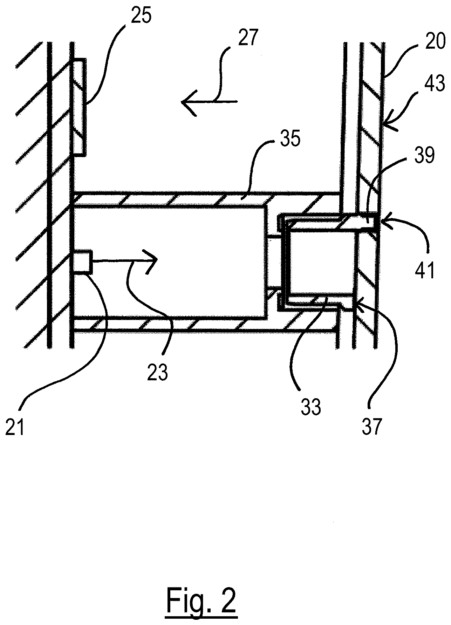

Wie insbesondere in Fig. 2 erkennbar ist, sind beide Trennelemente 33, 35 rohrförmig und jeweils so angeordnet, dass die Sendelichtstrahlen 23 durch die rohrförmigen Trennelemente 33, 35 hindurch verlaufen. Auf diese Weise wird verhindert, dass Licht vom Lichtsender 21 innerhalb des Gehäuses 19 und ohne das Gehäuse 19 zu verlassen zum Lichtempfänger 25 gelangt und das Messergebnis verfälscht. Bei der gezeigten Ausführungsform sind das erste lichtundurchlässige Trennelement 33 und das zweite lichtundurchlässige Trennelement 35 teleskopartig überlappend angeordnet. Das erste lichtundurchlässige Trennelement 33 weist an dem der Frontscheibe 20 zugewandten Rohrende 37 einen unvollständig umlaufenden Vorsprung 39 auf, der in einen Spalt 41 der Frontscheibe 20 eingreift und dabei bis zur Vorderseite 43 der Frontscheibe 20 reicht. Das heißt, das erste lichtundurchlässige Trennelement 33 trennt nicht nur im Inneren des Gehäuses 19 das Sendelicht vom Empfangslicht, sondern ist auch durch den Spalt 41 der Frontscheibe 20 hindurchgeführt, um eine Trennung innerhalb des Volumens der Frontscheibe 20 zu bewirken. Abgesehen von dem unvollständig umlaufenden Vorsprung 39 ist das erste lichtundurchlässige Trennelement 33 vollständig umlaufend.

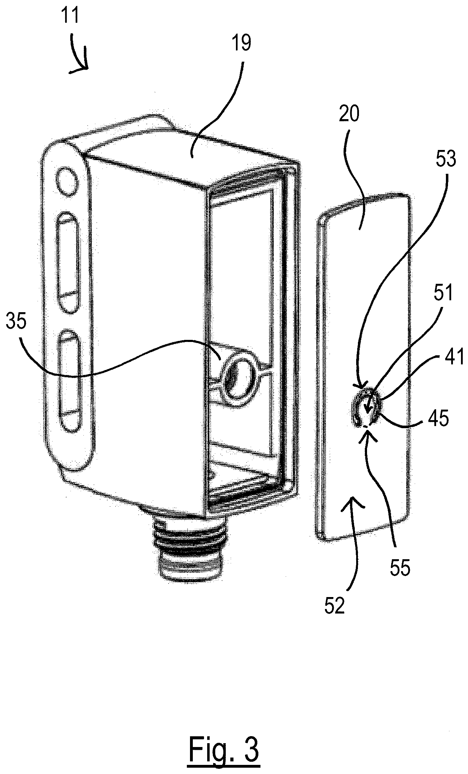

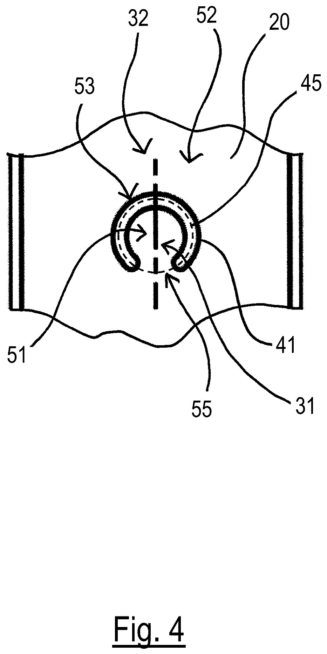

Wie in Fig. 3 und 4 zu erkennen ist, ist die Frontscheibe 20 entlang einer Trennlinie 45 in einen ersten Frontscheibenabschnitt 51 und einen zweiten Frontscheibenabschnitt 52 unterteilt. Der erste Frontscheibenabschnitt 51 umfasst den Durchtrittsbereich 31 für die Sendelichtstrahlen 23, während der zweite Frontscheibenabschnitt 52 den Durchtrittsbereich 32 für die Empfangslichtstrahlen 27 umfasst. Die Trennlinie 45 ist bei dem in Fig. 1-5 gezeigten Ausführungsbeispiel kreisförmig und läuft vollständig um den Durchtrittsbereich 31 für die Sendelichtstrahlen 23 um. Der Spalt 41 erstreckt sich entlang der Trennlinie 45, jedoch nicht vollständig umlaufend, sondern nur teilweise umlaufend. Speziell weist der Verlauf des Spalts 41 die Form eines unterbrochenen Rings oder eines Hufeisens auf. Somit weist die Trennlinie 45 außer einem durch den Spalt 41 gebildeten Unterbrechungsbereich 53 einen Verbindungsbereich 55 auf, in dem eine stoffschlüssige Verbindung zwischen dem ersten Frontscheibenabschnitt 51 und dem zweiten Frontscheibenabschnitt 52 besteht. Dementsprechend kann die Frontscheibe 20 einteilig ausgeführt sein, was die Herstellungskosten senkt und die Montage des optoelektronischen Sensors 11 erleichtert. Als bevorzugte Winkelausdehnung des Verbindungsbereichs 55 haben sich wenigstens 10° und höchstens 180°, beispielsweise etwa 45°, erwiesen.

Dass das erste lichtundurchlässige Trennelement 33 im Verbindungsbereich 55 nicht durch die Frontscheibe 20 hindurchgeführt ist, ist hinsichtlich des optischen Übersprechens unproblematisch, weil sich der Unterbrechungsbereich 53 zwischen dem Durchtrittsbereich 31 für die Sendelichtstrahlen 23 und dem Durchtrittsbereich 32 für die Empfangslichtstrahlen 27 befindet. Der Verbindungsbereich 55 ist also vom Empfangskanal abgewandt, so dass im Verbindungsbereich 55 eventuell auftretendes Störlicht nicht zum Lichtempfänger 25 gelangt.

Der Durchtrittsbereich 31 für die Sendelichtstrahlen 23 ist bei der Ausführungsform gemäß Fig. 1-5 im Wesentlichen deckungsgleich mit dem ersten Frontscheibenabschnitt 51. Demgegenüber ist der zweite Frontscheibenabschnitt 52 größer als der Durchtrittsbereich 32 für die Empfangslichtstrahlen 27, weil er auch Bereiche umfasst, die nicht für einen Durchtritt von Empfangslichtstrahlen 27vorgesehen sind, insbesondere die gemäß Fig. 4 seitlich und unterhalb des ersten Frontscheibenabschnitts 51 gelegenen Scheibenbereiche. Grundsätzlich könnte aber auch der erste Frontscheibenabschnitt 51 größer sein als der Durchtrittsbereich 31 für die Sendelichtstrahlen 23.

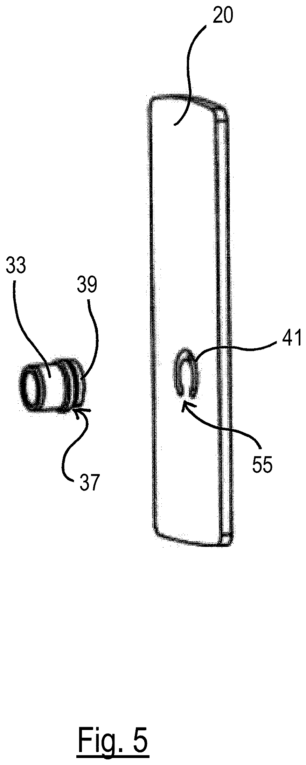

Bei der Herstellung des erfindungsgemäßen optoelektronischen Sensors 11 wird der Spalt 41 in die Frontscheibe 20 zum Beispiel eingefräst und die Frontscheibe 20 wird als Einzelbauteil bereitgestellt (Fig. 5). Das erste lichtundurchlässige Trennelement 33 wird mit dem Vorsprung 39 voran an die Frontscheibe 20 herangeführt und so in diese eingesetzt, dass das Rohrende 37 im Verbindungsbereich 55 an der Frontscheibe 20 anliegt und der Vorsprung 39 den Spalt 41 ausfüllt. Anschließend wird das erste lichtundurchlässige Trennelement 33 mit der Frontscheibe 20 verschweißt, vorzugsweise mittels Ultraschallschweißen. Alternativ könnte das erste lichtundurchlässige Trennelement 33 mit der Frontscheibe 20 verklebt werden. Anschließend wird die so gefertigte Vorbaugruppe an das Gehäuse 19 (Fig. 1) angefügt, beispielsweise durch Kleben und/oder Schweißen.

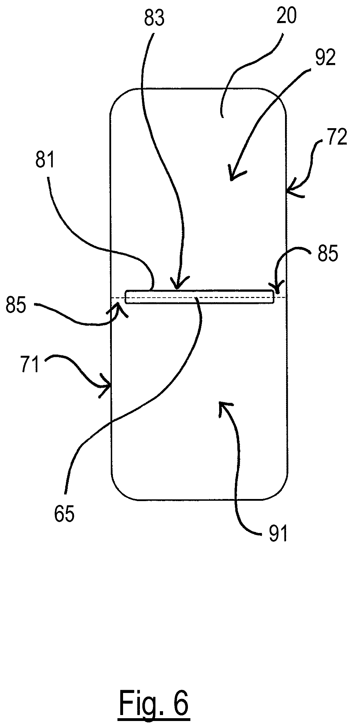

Bei der Ausführungsform gemäß Fig. 1-5 ist die Trennlinie 45 geschlossen und der erste Frontscheibenabschnitt 51 ist vom zweiten Frontscheibenabschnitt 52 vollständig umschlossen. Dies ist jedoch nicht zwingend. Beispielsweise kann die Trennlinie 65 wie in Fig. 6 gezeigt geradlinig verlaufen und sich von einem ersten Rand 71 der Frontscheibe 20 bis zu einem entgegengesetzten zweiten Rand 72 der Frontscheibe 20 erstrecken, während sich der Spalt 81 lediglich über einen zentralen Bereich der Trennlinie 65 erstreckt. In diesem Fall weist die Trennlinie 65 neben einem zentralen Unterbrechungsbereich 83 zwei randseitige Verbindungsbereiche 85 auf. Alternativ könnte auch nur ein randseitiger Verbindungsbereich 85 vorhanden sein. Auch könnte der Verlauf der in Fig. 6 dargestellten Trennlinie 65 gekrümmt oder geknickt sein. Die beiden Frontscheibenabschnitte 91, 92 sind bei dem Ausführungsbeispiel gemäß Fig. 6 nebeneinanderliegend und gleich groß.

Bei dem erfindungsgemäßen optoelektronischen Sensor 11 kann es sich zum Beispiel um einen Time-of-Flight-Sensor (TOF-Sensor) oder um einen Triangulationssensor handeln. Eine unterteilte Frontscheibe mit einem sich nur teilweise entlang der Trennlinie erstreckenden Spalt kann jedoch auch bei anderen Sensortypen vorteilhaft sein.

### Bezugszeichenliste:

- 11: optoelektronischer Sensor
- 13: Objekt
- 19: Gehäuse
- 20: Frontscheibe
- 21: Lichtsender
- 23: Sendelichtstrahlen
- 25: Lichtempfänger
- 27: Empfangslichtstrahlen
- 31: Durchtrittsbereich für Sendelichtstrahlen
- 32: Durchtrittsbereich für Empfangslichtstrahlen
- 33: erstes lichtundurchlässiges Trennelement
- 35: zweites lichtundurchlässiges Trennelement
- 37: Rohrende
- 39: Vorsprung
- 41: Spalt
- 43: Vorderseite
- 45: Trennlinie
- 51: erster Frontscheibenabschnitt
- 52: zweiter Frontscheibenabschnitt
- 53: Unterbrechungsabschnitt
- 55: Verbindungsabschnitt
- 65: Trennlinie
- 71: erster Rand
- 72: zweiter Rand
- 81: Spalt
- 83: Unterbrechungsabschnitt
- 85: Verbindungsabschnitt
- 91: erster Frontscheibenabschnitt
- 92: zweiter Frontscheibenabschnitt

## Patentansprüche

1. Optoelektronischer Sensor (11) mit einem Gehäuse (19), einem in dem Gehäuse (19) angeordneten Lichtsender (21) zum Aussenden von Sendelichtstrahlen (23), einem in dem Gehäuse (19) angeordneten Lichtempfänger (25) zum Empfangen von Empfangslichtstrahlen (27) und einer lichtdurchlässigen Frontscheibe (20) für einen Durchtritt der Sendelichtstrahlen (23) und der Empfangslichtstrahlen (27),
wobei die Frontscheibe (20) entlang einer Trennlinie (45, 65) in einen ersten, einen Durchtrittsbereich (31) für die Sendelichtstrahlen (23) umfassenden Frontscheibenabschnitt (51, 91) und einen zweiten, einen Durchtrittsbereich für die Empfangslichtstrahlen (32) umfassenden Frontscheibenabschnitt (52, 92) unterteilt ist,
wobei in dem Gehäuse (19) zur Trennung von Sendelicht und Empfangslicht ein lichtundurchlässiges Trennelement (33) angeordnet ist, das in einen entlang der Trennlinie (45, 65) verlaufenden Spalt (41, 81) der Frontscheibe (20) hineingeführt oder durch diesen hindurchgeführt ist, wobei sich der Spalt (41, 81) lediglich entlang eines Teils der Trennlinie (45, 65) erstreckt, so dass die Trennlinie (45, 65) außer einem durch den Spalt (41, 81) gebildeten Unterbrechungsbereich (53, 83) wenigstens einen Verbindungsbereich (55, 85) aufweist, in welchem eine stoffschlüssige Verbindung zwischen dem ersten Frontscheibenabschnitt (51, 91) und dem zweiten Frontscheibenabschnitt (52, 92) besteht.

2. Optoelektronischer Sensor nach Anspruch 1,
wobei der Verbindungsbereich (55) auf einer dem Durchtrittsbereich (32) für die Empfangslichtstrahlen (27) abgewandten Seite des Durchtrittsbereiches (31) für die Sendelichtstrahlen (23) angeordnet ist.

3. Optoelektronischer Sensor nach Anspruch 1 oder 2,
wobei die Trennlinie (45) vollständig um den Durchtrittsbereich (31) für die Sendelichtstrahlen (23) umläuft und der Spalt (41) unvollständig um den Durchtrittsbereich (31) für die Sendelichtstrahlen (23) umläuft.

4. Optoelektronischer Sensor nach Anspruch 3,
wobei der Verlauf des Spalts (41) die Form eines unterbrochenen Rings aufweist.

5. Optoelektronischer Sensor nach Anspruch 4,
wobei sich der Verbindungsbereich (55), der durch die Unterbrechung des Rings gebildet wird, über einen Winkel von wenigstens 10°, vorzugsweise von wenigstens 20°, und/oder von höchstens 180°, vorzugsweise von höchstens 90°, erstreckt.

6. Optoelektronischer Sensor nach einem der Ansprüche 3 bis 5,
wobei das Trennelement (33) rohrförmig ist und derart angeordnet ist, dass im Betrieb des optoelektronischen Sensors (11) die Sendelichtstrahlen (23) durch das rohrförmige Trennelement (33) hindurch verlaufen.

7. Optoelektronischer Sensor nach Anspruch 6,
wobei das rohrförmige Trennelement (33) an einem Rohrende (37) einen unvollständig umlaufenden Vorsprung (39) aufweist, welcher in den Spalt (41) eingreift, vorzugsweise den Spalt (41) vollständig ausfüllt.

8. Optoelektronischer Sensor nach Anspruch 1 oder 2,
wobei sich die Trennlinie (65) von einem ersten Rand (71) der Frontscheibe (20) bis zu einem entgegengesetzten zweiten Rand (72) der Frontscheibe (20) erstreckt und sich der Spalt (81) lediglich über einen zentralen Bereich der Trennlinie (65) oder einseitig über einen an den ersten Rand (71) oder den zweiten Rand (72) angrenzenden Bereich erstreckt.

9. Optoelektronischer Sensor nach einem der vorstehenden Ansprüche,
wobei das Trennelement (33) im Bereich des Spaltes (41, 81) mit der Frontscheibe (20) verschweißt ist.

10. Optoelektronischer Sensor nach einem der vorstehenden Ansprüche,
wobei in dem Gehäuse (19) eine elektronische Auswertungseinheit angeordnet ist, die mit dem Lichtsender (21) und dem Lichtempfänger (25) in Signalverbindung steht und dazu ausgebildet ist, für eine Entfernungsbestimmung die Laufzeit des Lichts zwischen dem Lichtsender (21) und dem Lichtempfänger (25) zu ermitteln.
